# EUROPEAN PATENT APPLICATION

(11) **EP 3 236 051 A1**
(43) Date of publication of application: **25.10.2017**
(21) Application number: 17165708.3
(22) Date of filing: 10.04.2017
(51) Int. Cl.: F02C 7/32, F02C 7/268, F02C 7/275, F01D 25/22

(54) **OIL-FREE GAS TURBINE ENGINE**

(30) Priority: 18.04.2016 US 201615131088
(71) Applicant: General Electric Company, Schenectady, NY 12345 (US)
(72) Inventor: ERTAS, Bugra Han, Nikayuna, NY 12309 (US); MOOK, Joshua Tyler, Cincinnati, OH 45215 (US)
(74) Representative: Pöpper, Evamaria

(57) **Abstract**

The present disclosure is directed to an oil-free gas turbine engine (10,101). The gas turbine engine (10,101) includes a compressor section (120), a combustion section (26,126), a turbine section (125), and an exhaust nozzle section (132). Further, the gas turbine engine (10,101) includes at least one rotary component configured to drivingly connect at least a portion of the turbine section to at least a portion of the compressor section (120). Moreover, the gas turbine engine (10,101) includes one or more gas-lubricated bearings (102) configured to support the rotary component. In addition, the gas turbine engine (10,101) includes a direct-drive starter-generator (104) configured to start the gas turbine engine (10,101). Thus, the gas turbine engine (10,101) of the present disclosure provides an engine that is at least partially oil free.

## Description

### FIELD OF THE INVENTION

The present subject matter relates generally to gas turbine engines, and more particularly to an electric, oil-free gas turbine engine.

### BACKGROUND OF THE INVENTION

A gas turbine engine generally includes a fan and a core engine arranged in flow communication with one another. Additionally, the core engine general includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section, e.g., to atmosphere.

Conventional gas turbine engines include rotor assemblies having shafts, compressor impellers, turbines, couplings, sealing packs, and other elements required for optimal operation under given operating conditions. These rotor assemblies have a mass generating a constant static force due to gravity, and also generate a dynamic force due to, e.g., imbalances in the rotor assembly during operation. Such gas turbine engines include bearing assemblies to sustain and support these forces while permitting rotation of the rotor assembly. A typical bearing assembly includes a bearing housed within a bearing housing and a bearing pad configured between the bearing and the shafts.

In addition, conventional aircraft engines operate using rolling element bearings. Such oil-requiring bearings support static and dynamics loads from the rotating system throughout the operating cycle of the engine. Further, typical rolling element bearings in an engine require separate bearing sumps constructed using complex part assemblies that serve several functions that are coupled with the necessity of oil. Such functions may include, for example, oil delivery, sealing, scavenge, bearing mounting, cooling, and/or damping. Though rolling element bearings are a proven technology that have been used since the conception of the jet engine, the necessity for oil requires several support hardware and ancillary devices.

For example, conventional aircraft engines utilizing rolling element bearings also include a radial drive shaft and an accessory gearbox. The radial drive shaft mechanically transmits power between the generator rotor and the accessory gearbox through a series of bevel and spur gears. Further, the accessory gearbox provides several functions of the engine including, for example, core rotation during engine start, electric power generation with geared starter-generator, oil-lube delivery pumps for the rolling element bearings, bearing sump scavenge pumps, a fuel booster pump, and a blower for the inlet-particle separator (IPS).

Due to the nature of the rolling element bearings and the mechanical components of the accessory gearbox, oil is required for successful operation of the engine. However, removal of the rolling element bearings and the accessory gearbox from the engine could potentially provide significant weight savings in addition to improved reliability of the system.

Accordingly, at least some known rotary machines use gas bearings where non-oil lubricated bearings are desired. To completely remove oil from the engine, however, the accessory gearbox must be removed as well. To successfully remove the accessory gearbox, however, each of the functions described herein must be accounted for.

In view of the aforementioned, an oil-free turboshaft engine would be welcomed in the art. More specifically, an electric, oil-free turboshaft engine having a direct-drive starter-generator rather than an accessory gearbox would be advantageous.

### BRIEF DESCRIPTION OF THE INVENTION

Aspects and advantages of the invention will be set forth in part in the following description, or may be obvious from the description, or may be learned through practice of the invention.

In one aspect, the present disclosure is directed to a gas turbine engine. The gas turbine engine includes a compressor section, a combustion section, and a turbine section. Further, the gas turbine engine includes at least one rotary component configured to drivingly connect at least a portion of the power turbine section to at least a portion of the compressor section. Moreover, the gas turbine engine includes one or more gas-lubricated bearings configured to support the rotary component. In addition, the gas turbine engine includes a direct-drive starter-generator configured to start the gas turbine engine. Thus, the gas turbine engine of the present disclosure provides a turbine engine that is at least partially oil free.

In another aspect, the present disclosure is directed to a method of operating a gas turbine engine having at least one gas-lubricated bearing. The method includes starting up the gas turbine engine via a direct-drive starter-generator by rotating a rotor of the starter-generator. Another step includes beginning to pressurize the gas-lubricated bearing with pressurized air from the compressor section to achieve bearing lift-off. The method also includes, as rotor speed increases and bearing torque decreases, continuously pressurizing the gas-lubricated bearing with gas through a boundary layer lubrication region to achieve a fully-pressurized gas-lubricated bearing.

In yet another aspect, the present disclosure is directed to an aircraft engine assembly. The aircraft engine assembly includes a rotorcraft transmission system having one or more power transmission input shafts and a gas turbine engine. The gas turbine engine includes a compressor section, a combustion section, a turbine section, a main shaft configured to drivingly connect at least a portion of the power turbine section to at least a portion of the compressor section, one or more gas-lubricated bearings configured to support the rotary component, and a direct-drive starter-generator configured to start the gas turbine engine, wherein the gas turbine engine is at least partially oil free. The aircraft engine assembly also includes one or more rolling element bearings configured on the one or more power transmission input shafts at an interface of the rotorcraft transmission system and the gas turbine engine.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a schematic cross-sectional view of one embodiment of a gas turbine engine according to the present disclosure;
FIG. 2 illustrates a partial, side view of a gas turbine engine according to conventional construction;
FIG. 3 illustrates a partial, side view of one embodiment of an aircraft engine assembly according to the present disclosure;
FIG. 4 illustrates a partial, detailed view of the aircraft engine assembly of FIG. 3;
FIG. 5 illustrates a partial, side view of another embodiment of an aircraft engine assembly according to the present disclosure;
FIG. 6 illustrates a flow diagram of one embodiment of a method for operating a gas turbine engine according to the present disclosure;
FIG. 7 illustrates a graph of one embodiment of the various operating modes of the gas turbine engine according to the present disclosure; and
FIG. 8 illustrates a schematic diagram of the lubrication regime of a gas-lubricated bearing and a rotary component during the various operating modes according to the present disclosure.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

Generally, the present disclosure is directed to an oil-free gas turbine engine, such as an oil-free turboshaft or turbofan engine. The gas turbine engine includes a core engine having a compressor section, a combustion section, a power turbine section, a core or gas generator section, and an exhaust nozzle section. Further, the gas turbine engine includes at least one rotary component configured to drivingly connect at least a portion of the power turbine section to at least a portion of the compressor section. Moreover, the gas turbine engine includes one or more gas-lubricated bearings configured to support the rotary component. In addition, the gas turbine engine includes a direct-drive starter-generator configured to start the gas turbine engine and also generate electrical power for engine accessories through mission cycles. Thus, the gas turbine engine of the present disclosure provides a turbine engine that is at least partially oil free. As used herein, "at least partially oil free" generally refers to any engine configuration having at least one conventionally oil-utilizing component (e.g. sump of the like) that is replaced with a non-oil component. The present disclosure also provides for an engine having a completely oil-free configuration.

Accordingly, the present disclosure provides many advantages not present in the prior art. For example, with the use of additively manufactured gas bearings, all oil based sump hardware/components can be eliminated and replaced with a single bearing component. Thus, adopting gas bearings to support engine rotor assemblies not only reduces part count and weight, but also enables ultra-high rotating speeds beyond DN (i.e. surface speed) limits of rolling element bearings, which results in high power density. In addition, without the requirement of sumps, the gas bearings can be placed at any location along the rotary components of the engine.

An additional aspect of the oil-free gas turbine engine of the present disclosure advances an alternative method for pressurizing at least one gas-lubricated bearing such that external pressurization is delivered without rotation of the gas-generator shaft, which results in near-zero bearing torque at 0 RPM. The method further encompasses a transition from external pressurization from an auxiliary air system, such as a small blower or auxiliary power unit (APU) or an auxiliary air-cart, to pressurization from the compressor section at an appropriate engine speed. This methodology allows the bearing to circumvent operation at a condition with dry friction or boundary layer lubrication and enables start-up operation only in the fully-developed hydrodynamic lubrication regime.

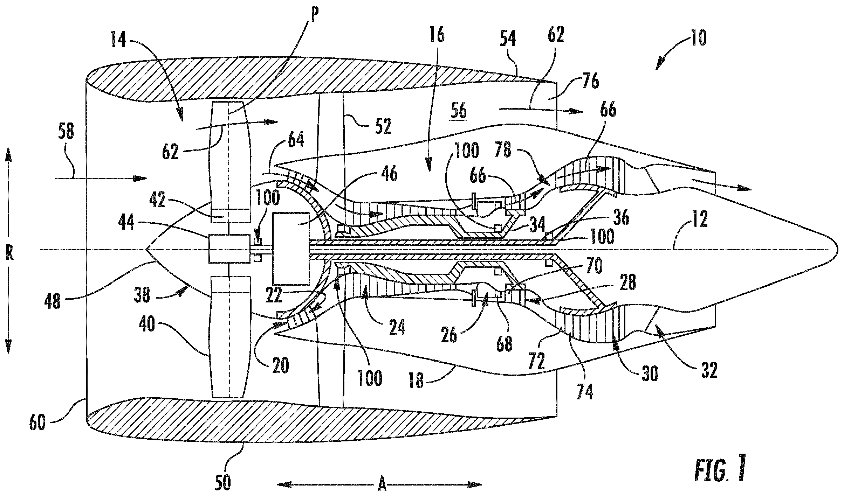

Referring now to the drawings, wherein identical numerals indicate the same elements throughout the figures, FIG. 1 illustrates one embodiment of a schematic cross-sectional view of a turbomachine according to the present disclosure. More particularly, for the embodiment of FIG. 1, the turbomachine is configured as a gas turbine engine, or rather as a high-bypass turbofan jet engine or a turboshaft engine. As shown in FIG. 1, the gas turbine engine 10 defines an axial direction A1 (extending parallel to a longitudinal centerline 12 provided for reference), a radial direction R1, and a circumferential direction (not shown) extending about the axial direction A1. In general, the gas turbine engine 10 includes a fan section 14 and a core turbine engine 16 disposed downstream from the fan section 14.

More specifically, as shown, the core turbine engine 16 depicted generally includes a substantially tubular outer casing 18 that defines an annular inlet 20. The outer casing 18 encases and the core turbine engine 16 includes, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. Accordingly, the LP shaft 36 and HP shaft 34 are each rotary components, rotating about the axial direction A1 during operation of the gas turbine engine 10.

In order to support such rotary components, the gas turbine engine 10 includes a plurality of bearing assemblies 80 attached to various structural components within the gas turbine engine 10. More specifically, as shown, the bearing assemblies 80 facilitate rotation of the LP shaft 36 and the HP shaft 34 and dampen vibrational energy imparted to bearing assemblies 80 during operation of the gas turbine engine 10.

Referring still to the embodiment of FIG. 1, the fan section 14 includes a variable pitch fan 38 having a plurality of fan blades 40 coupled to a disk 42 in a spaced apart manner. As depicted, the fan blades 40 extend outwardly from disk 42 generally along the radial direction R1. Each fan blade 40 is rotatable relative to the disk 42 about a pitch axis P by virtue of the fan blades 40 being operatively coupled to a suitable pitch change mechanism 44 configured to collectively vary the pitch of the fan blades 40 in unison. The fan blades 40, disk 42, and pitch change mechanism 44 are together rotatable about the longitudinal axis 10 by LP shaft 36 across a power gearbox 46. The power gear box 46 includes a plurality of gears for adjusting the rotational speed of the fan 38 relative to the LP shaft 36 to a more efficient rotational fan speed. More particularly, the fan section includes a fan shaft rotatable by the LP shaft 36 across the power gearbox 46. Accordingly, the fan shaft may also be considered a rotary component, and is similarly supported by one or more bearings.

Referring still to the exemplary embodiment of FIG. 1, the disk 42 is covered by a rotatable front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. The nacelle 50 is supported relative to the core turbine engine 16 by a plurality of circumferentially-spaced outlet guide vanes 52. Moreover, a downstream section 54 of the nacelle 50 extends over an outer portion of the core turbine engine 16 so as to define a bypass airflow passage 56 therebetween.

During operation of the gas turbine engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the core air flowpath 37, or more specifically into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

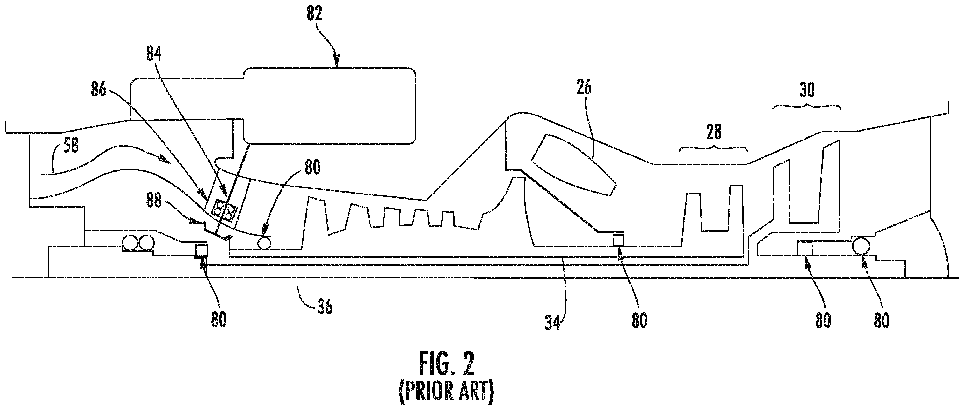

Referring now to FIG. 2, a partial, side view of the gas turbine engine 10 according to conventional construction is illustrated. As shown in FIG. 2, the gas turbine engine 10 includes a plurality of conventional, i.e. oil-lubricated, bearing assemblies 80 spaced along the shafts 34, 36 to facilitate rotation thereof. Further, as shown, the conventional gas turbine engine 10 also includes a radial drive shaft 84 and an accessory gearbox 82. Thus, the radial drive shaft 84 mechanically transmits power between the gas generator rotor and the accessory gearbox 82 through a series of bevel and spur gears 88. Further, the accessory gearbox 82 provides core rotation during engine start, electric power generation with geared starter-generator, oil-lube delivery pumps for the rolling element bearings, bearing sump scavenge pumps, a fuel pump, and a blower for the inlet-particle separator (IPS). As mentioned, conventional oil-lubricated engines are not without drawbacks. For example, each of the bearings 80 requires separate sumps constructed of complex part assemblies requiring oil, such as oil delivery, sealing, scavenge, bearing mounting, cooling, and/or damping.

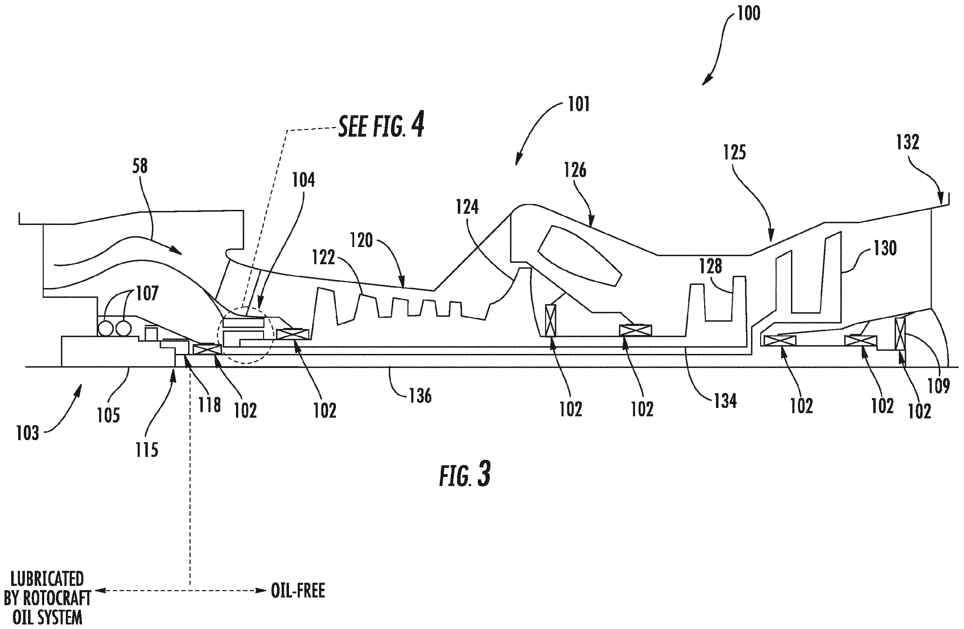

Thus, as shown in FIG. 3, a partial, side view of an aircraft engine assembly 100 according to the present disclosure is illustrated. As shown, the aircraft engine assembly 100 includes a rotorcraft transmission system 103 having one or more power transmission input shafts 105 and a gas turbine engine 101. It should be understood that the gas turbine engine 101 of FIG. 3 is generally configured similar to the conventional gas turbine engine 10 of FIG. 1, with the exception of the conventional oil-lubricated bearings 80 and the accessory gearbox 82. For example, the gas turbine engine 101 of the present disclosure includes a compressor section 120, a combustion section 126, a turbine section 125, and an exhaust nozzle section 132. Further, the gas turbine engine 101 includes at least one rotary component configured to drivingly connect at least a portion of the turbine section 128 to at least a portion of the compressor section 120. More specifically, as shown, the compressor section 120 may include a high pressure compressor (HPC) 122 and a low pressure compressor (LPC) 124. In addition, the turbine section 125 may include a high pressure (HP) turbine 128 and a power turbine 130. Further, the rotary component(s) may include a high speed shaft 134 drivingly connecting the HP turbine 128 to the compressor 124 and/or a power turbine shaft 136 drivingly connecting the power turbine 130. Moreover, the power turbine shaft 136 then mechanically couples to the rotorcraft power transmission system.

In addition, as shown, the gas turbine engine 101 includes one or more gas-lubricated bearings 102 configured to support the rotary component(s), e.g. shafts 134, 136. In addition, as shown, the gas turbine engine 101 includes a direct-drive starter-generator 104 configured, at least, to start the gas turbine engine 101. Thus, the gas turbine engine 101 of the present disclosure provides an oil-free engine, which will be discussed in more detail herein.

It should be appreciated, however, that the gas turbine engine 101 depicted in FIG. 3 is provided by way of example only, and that in other exemplary embodiments, the gas turbine engine 101 may have any other suitable configuration. It should also be appreciated, that in still other exemplary embodiments, aspects of the present disclosure may be incorporated into any other suitable gas turbine engine. For example, in other exemplary embodiments, aspects of the present disclosure may be incorporated into, e.g., a turboprop engine, a turboshaft engine, a turbofan engine, or a turbojet engine. Further, in still other embodiments, aspects of the present disclosure may be incorporated into any other suitable turbomachine, including, without limitation, a steam turbine, a centrifugal compressor, and/or a turbocharger.

The aircraft engine assembly 100, i.e. the rotorcraft transmission system 103, may also include one or more rolling element bearings 107 configured with the power transmission input shaft(s) 105 at an interface of the rotorcraft transmission system 103 and the gas turbine engine 101. Such rolling element bearings 107 may be conventional oil-lubricated bearings, however, it should be understood, that the gas turbine engine 101 remains oil-free as the rolling element bearings 107 are contained in sumps and are separated from the gas turbine engine 101 via a sump sealing system 118.

The gas-lubricated bearings 102 of the present disclosure can be any suitable gas or air-lubricated bearings now known or later developed in the art. For example, in one embodiment, the gas-lubricated bearings 102 may include the bearings described in U.S. 2016/0169281 A1, entitled "Bearing having integrally formed components" filed on December 11, 2014, which is incorporated herein by reference in its entirety. In addition, although the gas-lubricated bearings 102 are described and illustrated as being located generally at forward and aft ends of the respective LP shaft 36 and HP shaft 34, the bearings 102 may additionally, or alternatively, be located at any desired location along the LP shaft 36 and HP shaft 34 including, but not limited to, central or mid-span regions of the shafts 34, 36, or any other locations along shafts 34, 36.

In addition, the direct-drive starter-generator 104 enables core rotation during engine start and provides electrical power transmission engine accessories during mission cycles. For example, in certain embodiments, the direct-drive starter-generator 104 is further configured to provide electrical power to one or more electrically-driven components of the engine 101. More specifically, in certain embodiments, the electrically-driven component(s) of the engine 101 may include a blower, a fuel pump, an igniter box, an electro-hydraulic inlet guide vane (IGV) actuator, or any other engine component requiring electrical power.

Variable-speed drives on accessories enable core-independent speed control of the fuel pump and blower. Such flexibility allows the optimization of fuel delivery resulting in reduced return-to-tank recirculation; impacting the overall Thermal Management System (TMS) of the gas turbine engine 101. Furthermore, operating the blower only when necessary contributes to an overall better efficiency of the engine 101. Both the fuel pump and the blower can be mounted either on the gas bearings 102to maintain an oil-free system. Still other functions from the direct-drive starter-generator 104 may include providing power to the ignitor box and electro-hydraulic IGV actuation.

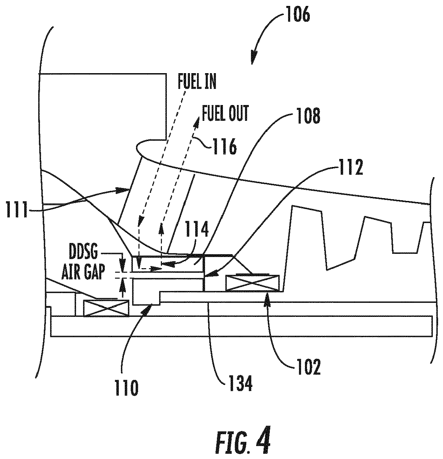

Referring now to FIG. 4, the direct-drive starter-generator 104 may also include a cooling system 106 configured with stator windings 108 of the starter-generator 104 as one challenge with the starter-generator 104 is the cooling of such windings 108. In conventional starter-generators, the generator is cooled using oil. Since the gas turbine engine 101 of the present disclosure is oil-free, the cooling system 106 leverages the fuel for extracting heat from the direct-drive starter-generator 104. More specifically, fuel delivery can be achieved through the front strut assembly 111 (FIG. 4) to a cooling jacket (potentially additive) on the outer surface of the electric stator backing. As heat is removed from the electric stator windings 108 through convection/conduction, the heated fuel passes through a surface air-fuel heat exchanger 114 (potentially additive) embedded below the leading edge surface of the front frame struts. In other words, as shown in FIG. 4, the cooling system 106 may include a heat exchanger 114 and a cooling fluid 116, i.e. fuel that is circulated through a housing of the stator windings 108. In alternative embodiments, the cooling system 106 may also include anti-coking technologies like de-ox of the fuel or coking resistant coatings in fuel passages.

In certain embodiments, the rotor 110 of the direct-drive starter-generator 104 may be a permanent magnet machine using rare earth magnets such as samarium-cobalt or neodymium. Thus, to maximize electric machine efficiency and power density, the direct-drive starter-generator 104 may include a carbon fiber retaining ring 112 for supporting the magnet assembly as shown in FIG. 4. Using carbon-fiber allows for smaller air gaps between the stator and rotor assemblies, which can significantly increase power density of the electric machine. One consideration is the side magnetic-pull force that the rotor 110 will experience. Thus, the bearing located on the forward end needs to sustains such a side pull load through the operating cycle and therefore, may need 0 rpm pressurization to operate reliably.

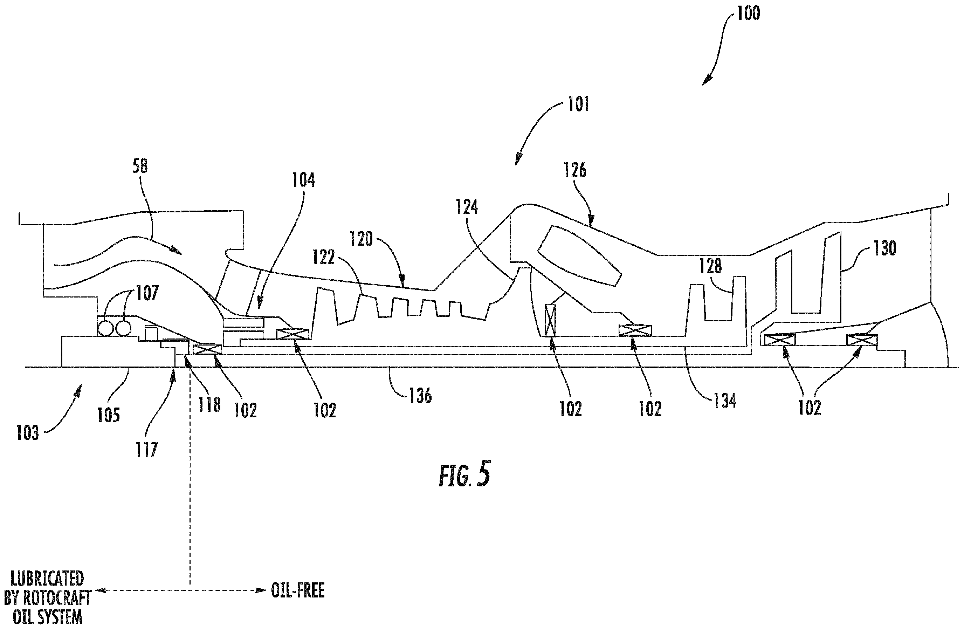

As shown in FIGS. 3 and 5, the aircraft engine assembly 100 may also include a spline joint configured between the power transmission input shaft(s) 105 and the main shaft 136. For example, as shown in FIG. 3, the aircraft engine assembly 100 may include a working spline joint 115 configured between the power transmission input shaft(s) 105 and the power turbine shaft 136. In such an embodiment, the power turbine thrust is reacted by an axial gas thrust bearing 109 in the aft end of the engine 101. Alternatively, as shown in FIG. 5, the aircraft engine assembly 100 may include a fixed spline joint 117 configured between the power transmission input shaft(s) and the power turbine shaft 136. In such an embodiment, the thrust from the power turbine is reacted by the rolling element bearings 107 supporting the power transmission input shaft 105.

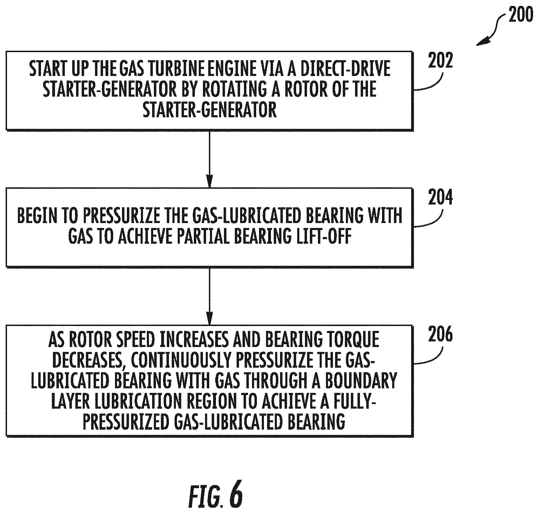

Referring now to FIG. 6, a flow diagram of one embodiment of a method 200 for operating a gas turbine engine 101 having at least one gas-lubricated bearing 102 according to the present disclosure is illustrated. As shown at 202, the method 200 includes starting up the gas turbine engine 101 via a direct-drive starter-generator 104 by rotating a rotor 110 of the starter-generator 104. As shown at 204, the method 200 includes beginning to pressurize the gas-lubricated bearing 102 with gas to achieve partial bearing lift-off. As shown at 206, the method 200 also includes, as rotor speed increases and bearing torque decreases, continuously pressurizing the gas-lubricated bearing 102 with gas through a boundary layer lubrication region to achieve a fully-pressurized gas-lubricated bearing. As used herein, the boundary layer (B.L.) lubrication region may include intermittent contact between the gas-lubricated bearing 102 and the rotor 110. Further, the fully-pressurized gas-lubricated bearing 102 may include a fully-developed hydrodynamic gas film comprising a thickness of about five (5) to about ten (10) times the average height on at least one of the gas-lubricated bearing 102 or the rotor 110. In another embodiment, the method 200 may also include shutting down the gas turbine engine 101 via the direct-drive starter-generator 104 and de-pressurizing the gas-lubricated bearing 102 to achieve bearing touch-down.

In additional embodiments, the step of beginning to pressurize the one or more gas-lubricated bearings 102 with gas to achieve bearing lift-off may occur before rotor rotation. Alternatively, the step of beginning to pressurize the one or more gas-lubricated bearings 102 with gas to achieve bearing lift-off may occur after rotor rotation. For example, in certain embodiments, the gas-lubricated bearings 102 may be pressurized before engine rotation using any suitable devices, such as but not limited to a blower, APU, or a ground based auxiliary air cart.

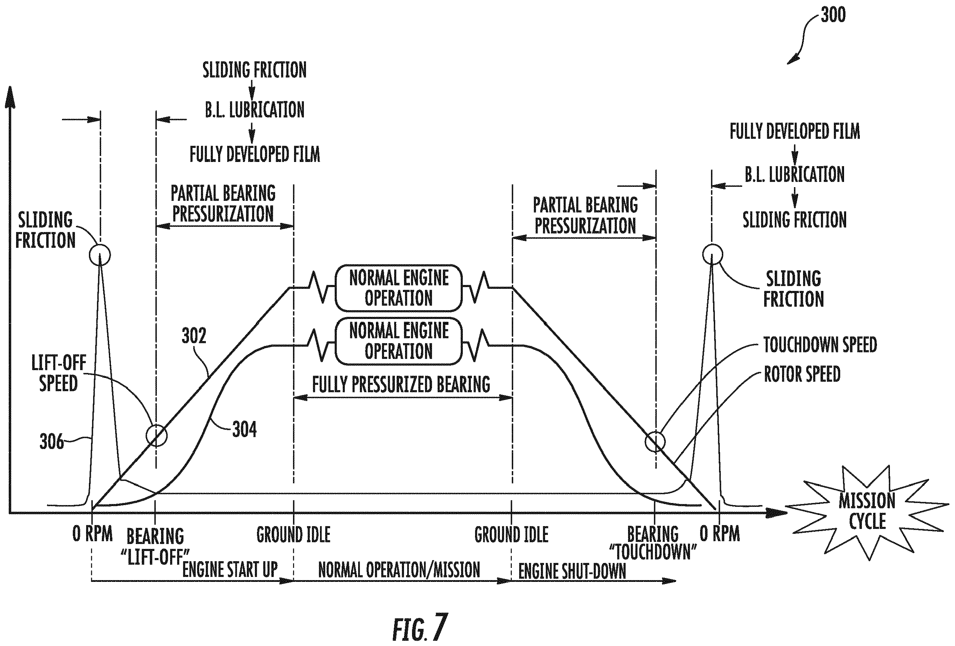

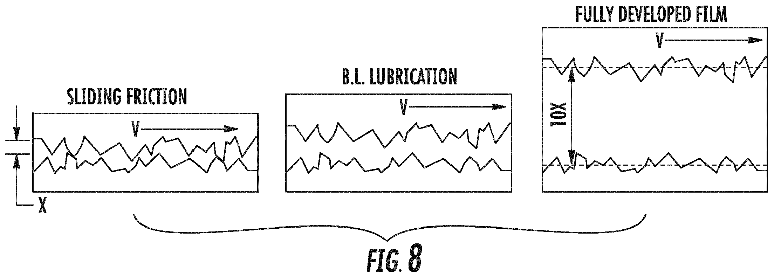

The method 200 of FIG. 6 can be better understood with respect to FIGS. 7 and 8. As shown in FIG. 7, a graph of one embodiment of the various operating modes of the gas turbine engine 101 according to the present disclosure is illustrated. Further, as shown, the graph illustrates rotor speed 302, pressurization 304, and bearing torque 306 as a function of engine operating points.

For reliable operation of the aircraft engine assembly 100, the gas-lubricated bearings 102 require external pressurization during flight mission due to the potential load cases that can arise during a mission. At start up (i.e. 0 rpm), the engine uses hydrodynamics to achieve bearing lift-off (FIG. 7). At 0 rpm, the bearing pad surface is in direct contact with the rotor surface and therefore the initial condition upon rotor rotation is sliding friction (FIG. 8). Thus, this point is where the bearing torque or resistance to rotation is a maximal. Commercially available high temperature wear coatings can be used to reduce start-up torque and increase the operating life through required operating cycles. As the bearing torque drops with increasing rotor speed, the bearing 102 transitions through a boundary layer (B.L.) lubrication region (FIG. 8) where there is intermittent contact between aspirates, i.e. between the bearing surface and the rotor 110.

At lift-off-speed, the bearing(s) 102 has a fully developed hydrodynamic gas film where the film thickness is roughly 10X the asperity height on the lubricating surfaces (FIG. 8). In certain embodiments, the lift off speed occurs at the lowest speed possible so that heat generation is minimized and rotor resonances are traverse with a fully developed film. As the gas turbine engine 101 reaches ground idle, the bearing(s) 102 is receiving full external pressurization from the high-pressure compressor 124 in preparation for the mission. Shut-down for this mode of operation begins with hydrodynamic lubrication and ends with sliding friction.

In an alternative embodiment, as mentioned, the bearing(s) 102 involves pressurizing the gas bearing before rotor rotation. This approach circumvents the sliding friction and transition through film development and yields a more robust bearing design. For example, such a method does not require the alignment precision required by pressurizing the gas bearing after rotation due to initially having a significant hydrostatic gas film. Further, 0 rpm external pressurization can be achieved through multiple sources including but not limited to: ground air start, battery driven electric engine accessory like a centrifugal compressor wheel, accumulator/on-board pressure vessel, APU, or similar.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A gas turbine engine, comprising:
   a compressor section, a combustion section, and a turbine section;
   at least one rotary component configured to drivingly connect at least a portion of the turbine section to at least a portion of the compressor section;
   one or more gas-lubricated bearings configured to support the rotary component; and
   a direct-drive starter-generator configured to start the gas turbine engine,
   wherein the gas turbine engine is at least partially oil free.
2. The gas turbine engine of clause 1, wherein the direct-drive starter-generator is further configured to provide electrical power to one or more electrically-driven components of the engine.
3. The gas turbine engine of clause 2, wherein the one or more electrically-driven components of the engine comprise at least one of a blower, a fuel pump, an igniter box, or an electro-hydraulic inlet guide vane (IGV) actuator.
4. The gas turbine engine of clause 1, wherein the direct-drive starter-generator further comprises a cooling system configured with stator windings of the starter-generator.
5. The gas turbine engine of clause 4, wherein the cooling system further comprises a heat exchanger and a cooling fluid that is circulated through a stator winding housing.
6. The gas turbine engine of clause 5, wherein the cooling fluid comprises fuel.
7. The gas turbine engine of clause 1, wherein the direct-drive starter-generator further comprises a carbon fiber retaining ring.
8. The gas turbine engine of clause 1, wherein the compressor section comprises a low pressure (LP) compressor and a high pressure (HP) compressor.
9. The gas turbine engine of clause 8, wherein the turbine section comprises a gas generator turbine and a power turbine.
10. The gas turbine engine of clause 9, wherein the at least one rotary component comprises at least one of a high pressure (HP) shaft drivingly connecting the HP turbine to the HP compressor or a low pressure (LP) shaft drivingly connecting the LP turbine to the LP compressor.
11. A method of operating a gas turbine engine having at least one gas-lubricated bearing, the method comprising:
   starting up the gas turbine engine via a direct-drive starter-generator by rotating a rotor of the starter-generator;
   beginning to pressurize the gas-lubricated bearing with gas to achieve partial bearing lift-off;
   as rotor speed increases and bearing torque decreases, continuously pressurizing the gas-lubricated bearing with gas through a boundary layer lubrication region to achieve a fully-pressurized gas-lubricated bearing.
12. The method of clause 11, further comprising shutting down the gas turbine engine via the direct-drive starter-generator and de-pressurizing the gas-lubricated bearing to achieve partial bearing touch-down.
13. The method of clause 11, wherein the boundary layer lubrication region comprises intermittent contact between the gas-lubricated bearing and the rotor.
14. The method of clause 11, wherein the fully-pressurized gas-lubricated bearing comprises a fully-developed hydrodynamic gas film comprising a thickness of about 5 to about 10 times an asperity height on at least one of the gas-lubricated bearing or the rotor.
15. The method of clause 11, wherein beginning to pressurize the one or more gas-lubricated bearings with gas to achieve bearing lift-off occurs before rotor rotation.
16. The method of clause 11, wherein beginning to pressurize the one or more gas-lubricated bearings with gas to achieve bearing lift-off occurs after rotor rotation.
17. An aircraft engine assembly, comprising:
   a rotorcraft transmission system comprising one or more power transmission input shafts;
   a gas turbine engine comprising:
      a compressor section, a combustion section, and a turbine section;
      a main shaft configured to drivingly connect at least a portion of the turbine section to at least a portion of the compressor section;
      one or more gas-lubricated bearings configured to support the rotary component; and
      a direct-drive starter-generator configured to start the gas turbine engine, wherein the gas turbine engine is at least partially oil free; and
   one or more rolling element bearings configured on the one or more power transmission input shafts at an interface of the rotorcraft transmission system and the gas turbine engine.
18. The aircraft engine assembly of clause 17, further comprising a sump sealing system for each of the rolling element bearings to maintain the oil-free gas turbine engine.
19. The aircraft engine assembly of clause 17, further comprising a working spline joint configured between the one or more power transmission input shafts and the main shaft.
20. The aircraft engine assembly of clause 17, further comprising a fixed spline joint configured between the one or more power transmission input shafts and the main shaft.

## Claims

1. A gas turbine engine (10,101), comprising:
a compressor section (120), a combustion section (26,126), and a turbine section (125);
at least one rotary component configured to drivingly connect at least a portion of the turbine section (125) to at least a portion of the compressor section (120);
one or more gas-lubricated bearings (102) configured to support the rotary component; and
a direct-drive starter-generator (104) configured to start the gas turbine engine (10,101), wherein the gas turbine engine (10,101) is at least partially oil free.

2. The gas turbine engine (10,101) of claim 1, wherein the direct-drive starter-generator (104) is further configured to provide electrical power to one or more electrically-driven components of the engine (10,101).

3. The gas turbine engine (10,101) of claim 2, wherein the one or more electrically-driven components of the engine (10,101) comprise at least one of a blower, a fuel pump, an igniter box, or an electro-hydraulic inlet guide vane (IGV) actuator.

4. The gas turbine engine (10,101) of claim 1, wherein the direct-drive starter-generator (104) further comprises a cooling system (106) configured with stator windings of the starter-generator.

5. The gas turbine engine (10,101) of claim 4, wherein the cooling system (106) further comprises a heat exchanger (114) and a cooling fluid (116) that is circulated through a stator winding housing.

6. The gas turbine engine (10,101) of claim 5, wherein the cooling fluid (116) comprises fuel.

7. The gas turbine engine (10,101) of claim 1, wherein the direct-drive starter-generator (104) further comprises a carbon fiber retaining ring (112).

8. The gas turbine engine (10,101) of claim 1, wherein the compressor section (120) comprises a low pressure (LP) compressor (22,124) and a high pressure (HP) compressor (24,122), and wherein the turbine section (125) comprises a gas generator turbine (128) and a power turbine (130).

9. The gas turbine engine (10,101) of claim 8, wherein the at least one rotary component comprises at least one of a high pressure (HP) shaft (34) drivingly connecting the gas generator turbine (128) to the HP compressor (24,122) or a low pressure (LP) shaft (36) drivingly connecting the power turbine (130) to the LP compressor (22,124).

10. A method of operating a gas turbine engine (10,101) having at least one gas-lubricated bearing (102), the method comprising:
starting up the gas turbine engine (10,101) via a direct-drive starter-generator (104) by rotating a rotor of the starter-generator;
beginning to pressurize the gas-lubricated bearing (102) with gas to achieve partial bearing lift-off;
as rotor speed increases and bearing torque decreases, continuously pressurizing the gas-lubricated bearing (102) with gas through a boundary layer lubrication region to achieve a fully-pressurized gas-lubricated bearing (102).

11. The method of claim 10, further comprising shutting down the gas turbine engine (10,101) via the direct-drive starter-generator (104) and de-pressurizing the gas-lubricated bearing (102) to achieve partial bearing touch-down.

12. The method of claim 10, wherein the boundary layer lubrication region comprises intermittent contact between the gas-lubricated bearing (102) and the rotor.

13. The method of claim 10, wherein the fully-pressurized gas-lubricated bearing comprises a fully-developed hydrodynamic gas film comprising a thickness of 5 to 10 times an asperity height on at least one of the gas-lubricated bearing (102) or the rotor.

14. The method of claim 10, wherein beginning to pressurize the one or more gas-lubricated bearings (102) with gas to achieve bearing lift-off occurs before rotor rotation.

15. The method of claim 10, wherein beginning to pressurize the one or more gas-lubricated bearings (102) with gas to achieve bearing lift-off occurs after rotor rotation.
